# EUROPEAN PATENT APPLICATION

(11) **EP 1 303 135 A1**
(43) Date of publication of application: **16.04.2003**
(21) Application number: 01949978.9
(22) Date of filing: 13.07.2001
(51) Int. Cl.: H04N 5/92, H04N 7/173

(54) **IMAGE SIGNAL STORAGE/REPRODUCTION DEVICE, AND IMAGE SIGNAL TRANSMISSION DEVICE**

(30) Priority: 14.07.2000 JP 2000214320
(71) Applicant: MITSUBISHI DENKI KABUSHIKI KAISHA, Tokyo 100-8310 (JP)
(72) Inventor: YAMADA, Yoshihisa, c/o MITSUBISHI DENKI K.K., Chiyoda-ku, Tokyo 100-8310 (JP); OGAWA, Fuminobu, c/o MITSUBISHI DENKI K.K., Tokyo 100-8310 (JP); ONO, Midori, c/o MITSUBISHI DENKI KABUSHIKI KAISHA, Tokyo 100-8310 (JP); KURODA, Shinichi, c/o MITSUBISHI DENKI K.K., Tokyo 100-8310 (JP); SUGIMOTO, Kazuo, c/o MITSUBISHI DENKI K.K., Tokyo 100-8310 (JP); ASAI, Kohtaro, c/o MITSUBISHI DENKI K.K., Tokyo 100-8310 (JP)
(74) Representative: Nicholls, Michael John
(86) International application number: JP0106103
(87) International publication number: WO02007437

(57) **Abstract**

When a request for storage is input, a storage and reconstruction control unit transmits an intra-frame request signal to an image signal transmitting apparatus and also transmits a storage start signal to a coded signal storage unit. When the intra-frame request signal is received, a coding control unit of the image signal transmitting apparatus controls an image coding unit to code the entirety of an image in the intra-frame coding mode and transmits the coded image signal in which the entirety of an image is intra-frame coded to the image signal storage and reconstruction apparatus. The image decoding unit of the image signal storage and reconstruction apparatus decodes the coded image signal and the storage and reconstruction control unit starts the storage with the coded image signal in which the entirety of an image is coded, responsive to the storage start signal.

## Description

### TECHNICAL FIELD

The present invention relates to an image signal storage and reconstruction apparatus storing a coded image signal from an image signal transmission apparatus in accordance with a request for storage, and decoding the stored coded image signal in accordance with a request for reconstruction. The present invention further relates to an image signal transmitting apparatus transmitting a coded image signal to the image signal storage and reconstruction apparatus.

### BACKGROUND ART

Communication services using video such as videophone services are becoming widely available. In vide communication using a communication channel for speech communication such as a telephone line, an encoding process is performed to reduce the volume of information since the size of a video signal is significantly larger than that of the speech signal by an order of 100-1000.

A coding process for digital video is defined, for example, in ITU-T(International Telecommunication Union, Telecommunication Standardization Sector) Recommendations H.261 and H.263 and the MPEG international standard established by ISO(International Organization for Standardization)/IEC(International Electrotechnical Commission. Both of these standards employ a hybrid coding system in which inter-frame predictive coding with motion compensation and discrete cosine transform (DCT) are combined.

Discrete cosine transform uses correlation between pixels in a frame and is designed to reduce the volume of information in a frequency domain by subjecting an image signal to orthogonal transform in units of a block of 8 pixels by 8 pixels. Interframe predictive coding uses signal correlation found in adjacent frames constituting video and is configured to obtain a difference signal that occurs in adjacent frames so that the difference signal is coded. High-level signal correlation is obtained for an image that is rich in motion, using motion compensation prediction with the block matching technique. By coding a motion vector and the difference signal, the volume of information is reduced.

As a result of using the two methods of coding, two types of blocks are included in a coded image signal, one being an intra-frame coded block, and the other being a inter-frame block. In the intra-frame coding, decoding is possible using a single signal. In the inter-frame coding, an image is decoded by adding the decoded difference signal to the image signal of a frame already subjected to decoding.

When a coded image signal is processed for storage and reconstruction by the image signal storage and reconstruction apparatus according to the related art uses the hybrid coding system that includes the intra-frame coding and the inter-frame coding, there is a problem in that the reconstructed image is disturbed. More particularly, when the inter-frame coding is asserted at the head of the stored coded image signal, the image at the head cannot be properly decoded.

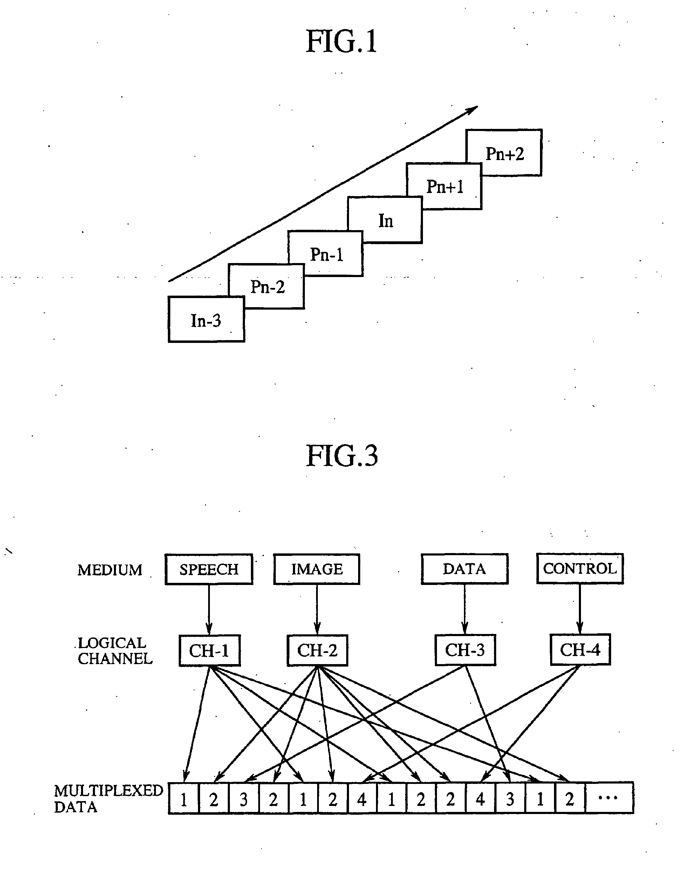

The problem will now be described in further detail with reference to Fig. 1. Referring to Fig. 1, I indicates an intra-frame coded image, P indicates images processed by the inter-frame image coding, and n-3∼n+2 indicate time. The frame In-3 should be decoded prior to the decoding of the frames Pn-2 and Pn-1. When the stored coded image signal that starts at the frame Pn-2 is to be reconstructed, the frames Pn-2 and Pn-1 cannot be properly decoded, causing the image to be disturbed. Proper decoding of the images can start only when the image In is reached.

The illustration shows the intra-frame coded image I being inserted at respective positions. However, insertion of the intra-frame coded image I is not an essential requirement and the entirety of the frames other than a frame at the start of a communication session, are coded in the inter-frame coding for the purpose of reducing the volume of image transmission.

For example, Japanese Laid-Open Patent Application No. 7-184189 discloses a type of coded image signal storage in which the coded image signal is decoded to reproduce an image so that the head frame is set to the intra-frame coding. The reproduced image is coded a second time for storage. This approach, however, results in the scale of apparatus being increased due to the need for provisions for the coding function in an apparatus for storage and reconstruction of image signals.

Accordingly, an object of the present invention is to provide an image signal storage and reconstruction apparatus and an image signal transmitting apparatus capable of reconstructing a coded image signal retrieved from storage, without requiring an increase in the scale of apparatus and without displaying disturbed images.

### DISCLOSURE OF THE INVENTION

The present invention provides an image signal reconstruction storage and reconstruction apparatus storing a coded image signal from an image signal transmitting apparatus in accordance with a request for storage and decoding the coded image signal thus stored, in accordance with a request for reconstruction, comprising: an image decoding unit decoding the coded image signal; and a coded signal storage unit storing the coded image signal; a storage and reconstruction control unit directing, in accordance with the request for storage, the image signal transmitting apparatus to transmit the coded image signal in which the entirety of an image is intra-frame coded, transmitting a request for storage to direct the coded signal storage unit to start the storage, and directing, in accordance with the request for reconstruction, the image decoding unit to start the reconstruction by decoding the coded image signal stored in the coded signal storage unit.

The storage and reconstruction control unit may request the transmission of the coded image signal in which the entirety of an image is intra-frame coded, by transmitting, responsive to the request for storage, the intra-frame request signal to the image signal transmitting apparatus.

The storage and reconstruction control unit may repeat the transmission of the intra-frame request signals.

The storage and reconstruction control unit may request, responsive to the request for storage, the transmission of the coded image signal in which the entirety of an image is intra-frame coded from the image signal transmitting apparatus, by temporarily closing a communication circuit for transmitting the coded image signal and then opening the same.

The image decoding unit may output, when decoding the coded image signal from the image signal transmitting apparatus, a coding mode signal indicating whether or not the entirety of an image is intra-frame coded, to the coded signal storage unit, and the coded signal storage unit may start the storage with the coded image signal in which the entirety of an image is intra-coded, in accordance with the coding mode signal.

The image decoding unit, when requested by the storage and reconstruction control unit to start the reconstruction, may determine whether the coded image signal stored in the coded signal storage unit is a coded image signal in which the entirety of an image is intra-coded, so as to start the reconstruction by start the decoding with the coded image signal in which the entirety of an image is intra-frame coded.

The coded signal storage unit may extract information, indicating a coding mode for the entirety of an image from the coded image signal transmitted from the image signal transmitting apparatus, so as to start the storage with the coded image signal in which the entirety of an image is intra-frame coded.

The present invention provides an image signal transmitting apparatus transmitting a coded image signal to an image signal storage and reconstruction apparatus, comprising: an image coding unit coding an input image signal and transmitting the coded image signal to the image signal storage and reconstruction apparatus; and a coding control unit controlling, in accordance with a request from the image signal storage and reconstruction apparatus for the coded image signal in which the entirety of an image is intra-frame coded, the image coding unit to transmit the coded image signal in which the entirety of an image is intra-frame coded to the image signal storage and reconstruction apparatus.

The present invention provides an image signal transmitting apparatus transmitting a coded image signal to an image signal storage and reconstruction apparatus, comprising: an image signal storage and transmission unit transmitting the coded image signal already stored to the image signal storage and reconstruction apparatus; and a transmission control unit controlling, in accordance with a request from the image signal storage and reconstruction apparatus for the coded image signal in which the entirety of an image is intra-frame coded, the image signal storage and transmission unit to transmit the coded image signal in which the entirety of an image is intra-frame coded to the image signal storage and reconstruction apparatus.

When repeatedly receiving the requests for transmission of the coded image signal in which the entirety of an image is intra-frame coded from the image signal storage and reconstruction apparatus, the coding control unit or the transmission control unit may control the frequency with which the input image signal for the entirety of an image is intra-frame coded, in accordance with the status of errors occurring in communication.

According to the invention, it is not necessary, in the process of reconstruction from the stored coded image signal, to perform a recoding process whereby the coded image signal is decoded and the decoded signal is coded for a second time for storage. Accordingly, reconstruction from the stored coded image signal is properly performed without requiring an increase in the scale of apparatus or displaying disturbed images.

### BRIEF DESCRIPTION OF THE DRAWINGS

Fig. 1 shows a problem with the related art.
Fig. 2 shows a construction of an image. signal storage reconstruction apparatus and an image signal transmitting apparatus according to a first embodiment of the present invention.
Fig. 3 shows a process for the closing and reopening of a transmission line for a coded image signal in multiplex communication according to, for example, the ITU-T H.223 standard.
Fig. 4 shows a construction of an image signal storage and reconstruction apparatus and an image signal transmitting apparatus according to a third embodiment of the present invention.

### BEST MODE OF CARRYING OUT THE INVENTION

To describe the invention in further detail, the best mode of carrying out the invention will now be described with reference to the accompanying drawings.

### First embodiment

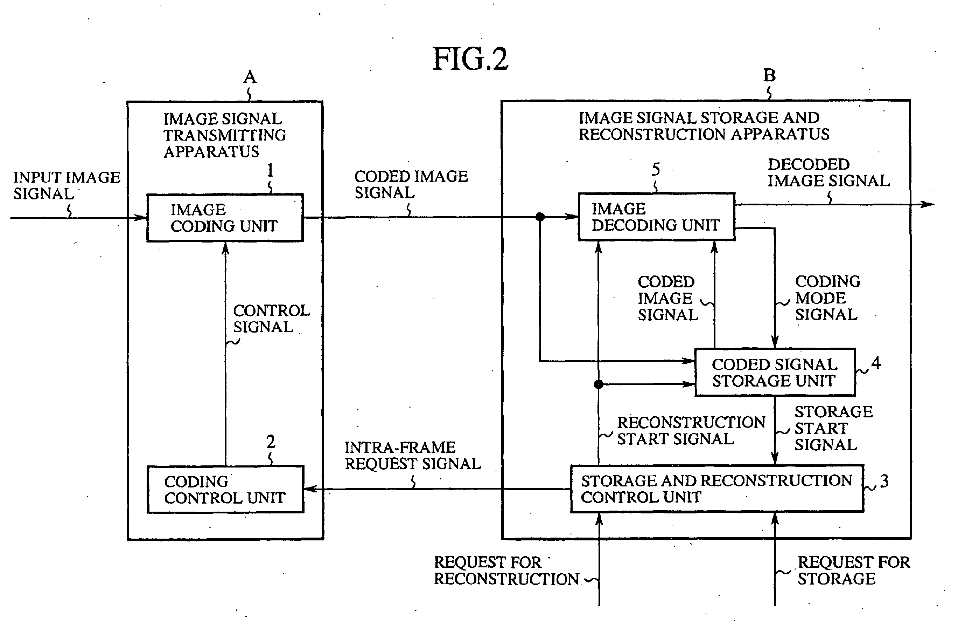

Fig. 2 shows a construction of an image signal storage and reconstruction apparatus and an image signal transmitting apparatus according to the first embodiment.

Referring to Fig. 2, the image signal transmitting apparatus A capable of wireless or wired transmission of an image signal comprises an image signal coding unit 1 and a coding control unit 2. The image signal transmitting apparatus A may be a portable telephone set, a personal digital assistant (PDA) or a videophone set. The image signal transmitting apparatus A may be provided with a camera for capturing an input image signal or an image signal input interface connected to an external camera. The image signal transmitting apparatus A may also be provided with a display that allows the coded image to be viewed.

The image signal storage and reconstruction apparatus B capable of wireless or wired reception of an image signal comprises a storage and reconstruction control unit 3, a code signal storage unit 4 and an image decoding unit 5. The image signal storage and reconstruction apparatus B may be a portable telephone set, a personal digital assistant (PDA) or a videophone set. The image signal storage and reconstruction apparatus B may be provided with a display that allows the decoded image to be viewed or an image signal input interface connected to an external display.

A description will now be given of the operation according to the first embodiment. A process for storage in the coded signal storage unit 4 and a process for reconstruction of the coded image signal stored in the coded signal storage unit 4 will now be described.

### [Process of storage in the coded signal storage unit 4]

The image signal storage and reconstruction apparatus B may be placed in one of two states before storing a coded image signal. In one of the two states, the coded image signal is being transmitted from the image signal transmitting apparatus A to the image signal storage and reconstruction apparatus B. In this state, the image coding unit 1 of the image signal transmitting apparatus A is coding the input image signal in accordance with the control by the coding control unit 2 and transmitting the coded image signal to the image signal storage and reconstruction unit B. In the other state, the image signal transmitting apparatus A has not transmitted the coded image signal to the image signal storage and reconstruction apparatus B yet.

Irrespective of the states, when a request for storage is input to the storage and reconstruction control unit 3, the storage and reconstruction control unit 3 issues an intra-frame request signal to the image signal transmitting apparatus A and transmits a signal directing the coded signal storage unit 4 to start storing the coded image signal. The request for storage input to the storage and reconstruction control unit 3 may be provided by manual input from a user of the image signal storage and reconstruction apparatus B. Alternatively, the request may be automatically generated inside or outside the image signal storage and reconstruction apparatus B when a preset time arrives or when a predetermined period of time elapses since the start of communication session.

The intra-frame request signal sent from the storage and reconstruction control unit 3 to the image signal transmitting apparatus A may not reach the image signal transmission apparatus A due to a communication error or the like. It is further to be noted that a certain period of time is required until the image signal storage and reconstruction apparatus B receives from the image signal transmitting apparatus A the intra-frame coded signal representing the entirety of an image, subsequent to the transmission of the intra-frame request signal from the image signal storage and reconstruction apparatus B.

One approach to eliminate the time described above is to transmit intra-frame request signals a plurality of times at preset points of time. For example, the requests may be transmitted at intervals of one second. The requests may be transmitted a preset number of times. Alternatively,. the transmission may continue until the intra-frame coded image signal has been received.

A communication error occurring during the storage of the coded image signal prevents the entirety of the coded image signal from being stored properly. One approach to eliminate this possibility is to configure the image signal storage and reconstruction apparatus B to keep transmitting the intra-frame request signals at predetermined intervals while the coded image signal is being stored.

When the image signal transmitting apparatus A receives the intra-frame request signal, the coding control unit 2 transmits a control signal to the image coding unit 1 so that the entirety of the image is coded in a intra-frame coding mode.

The image coding unit 1 is controlled by the coding control unit 2 to transmit the coded image signal produced by coding the entirety of the image in the intra-frame coding mode to the image signal storage and reconstruction apparatus B.

The intra-frame coded image signal from the image signal transmitting apparatus A is characterized by a relatively low coding efficiency. More specifically, the volume of codes per a frame is relatively large so that the number of frames transmitted per second is relatively small, resulting in a relatively low quality of code image.

Accordingly, when the intra-frame request signals are received a plurality of times, the coding control unit 2 of the image signal transmitting apparatus A may control the frequency of intra-frame coding of the entirety of an image in accordance with the status of errors occurring in communication.

More specifically, when communication errors are abundant, the coding control unit 2 may effects control so that the intra-frame coding is performed strictly as requested by the intra-frame request. When communication errors are relatively few, the frequency of the intra-frame coding may be less than that requested by the intra-frame request signal. As a result of such a control, the efficiency of coding is maintained at a predetermined level. Monitoring of communication errors may be performed by counting the number of errors occurring in signals such as the intra-frame request signal transmitted from the image signal storage and reconstruction apparatus B. Alternatively, the number of errors occurring in signals transmitted from the image signal transmitting apparatus may be counted so that an associated message relating to the status of communication is sent from the image signal storage and reconstruction apparatus B.

When the coded image signal is received from the image coding unit 1 of the image signal transmitting apparatus A, the image signal storage and reconstruction apparatus B plays back video by decoding the coded image signal in the image decoding unit 5 and outputting the decoded image signal to the display (not shown). The image signal storage and reconstruction apparatus B also outputs a coding mode signal indicating the coding mode of the coded image signal to the coded signal storage unit 4.

The storage and reconstruction control unit 3 is configured to transmit the intra-frame request signal to the image signal transmitting apparatus A responsive to the input of the request for storage and to transmit the signal directing the coded signal storage unit 4 to start storing the coded image signal. Responsive to the storage start signal, the coded signal storage unit 4 starts receiving the coded image signal from the image coding unit 1 of the image signal transmitting apparatus A and the coding mode signal from the image decoding unit 5.

Transmission of the intra-frame request signal from the image signal storage and reconstruction apparatus B to the image signal transmitting apparatus A does not ensure that the coded image signal resulting from the intra-frame coding of the entirety of an image is sent from the image signal transmitting apparatus A when the storage of the coded image signal is started in the coded signal storage unit 4. The coded image signal resulting from the inter-frame coding may be transmitted.

The coded signal storage unit 6 according to the first embodiment determines whether the entirety of the image in the input coded image signal is processed in the intra-frame coding mode, based on the coding mode signal from the image decoding unit 5. The coded image signal containing a block processed in the inter-frame coding mode is discarded without storing the same. When the coded image signal for a frame in which the entirety of an image is processed in the intra-frame coding mode is input, the process of storing the coded image signal is started.

By performing the process as described above, it is ensured that the decoding of the coded image signal stored in the coded signal storage unit 6 by the image decoding unit 5 starts with the coded image signal resulting from the intra-frame coding of the entirety of an image. Accordingly, an efficient storage process is ensured. Additionally, images are reconstructed for display without exhibiting any disturbance.

With this, it is ensured that the storage process in the image signal storage and reconstruction apparatus B starts with a coded signal frame in which the entirety of an image is processed in the intra-frame coding mode. The storage process in the coded signal storage unit 4 is described thus far.

### [Process of reconstructing a coded image signal stored in the coded signal storage unit 4]

When the request for reconstruction is input, for example, by the user, to the storage and reconstruction control unit 3, the storage and reconstruction control unit 3 issues a reconstruction start signal for reconstruction of the coded image signal to the coded signal storage unit 4 and the image decoding unit 5. The reconstruction start signal may be input only to the coded signal storage unit 4 so that the coded signal storage unit 4 responds to the reconstruction start signal to output the coded image signal stored therein to the image decoding unit 5 and the image decoding unit 5 starts reconstructing the input coded image signal. Alternatively, the reconstruction start signal may input only to the image decoding unit 5 so that the image decoding unit 5 responds to the start signal to red the coded image signal from the coded signal storage unit 4 for reconstruction thereof.

Since, according to the first embodiment, the coded signal storage unit 4 stores the coded image signal such that the intra-frame coded signal, in which the entirety of an image is coded in the intra-frame coding mode, is located at the head, reconstruction of the coded image signal in the image decoding unit 5 is started with the intra-frame coded signal stored in the coded signal storage unit 4.

Thus, according to the first embodiment, in reconstructing the coded image signal stored in the coded signal storage unit 4, frames that contain a block processed in the inter-frame coding mode are prevented from being decoded. Thereby, the image reconstructed for display is prevented from being disturbed.

The first embodiment thus eliminates the need for re-encoding. That is, the decoding of the coded image signal prior to reconstruction and the coding of the decoded image for storage are not necessary. Accordingly, the stored coded image signal is reconstructed without requiring an increase in the scale of apparatus and displaying disturbed image.

In the description given above of the first embodiment, the coded signal storage unit 4 makes a determination as to whether the entirety of an image is coded in the intra-frame coding mode before the storage process. Essentially, what is required is that, when the image decoding unit 5 decodes the coded image signal stored in the coded signal storage unit 4 for reconstruction, the reconstruction should start with signal in which the entirety of an image is coded in the intra-frame coding mode. An alternative to achieve this is that the coded signal storage unit 4 responds to the storage start signal to start the storage irrespective of whether the coded signal results from intra-frame coding mode or not. When decoding the coded image signal stored in the coded signal storage unit 4, the image decoding unit 5 determines whether the coded image signal in which the entirety of an image is coded in the intra-frame coding mode is identified, based on the coding mode signal stored with the coded image signal. The coded image signal containing a block processed in the inter-frame coding mode are prevented from being decoded or, if decoded, prevented from being output as a decoded image signal so that the coded image signal in which the entirety of an image is coded in the intra-frame coding mode is located at the head of the decoded image signal.

In the MPEG-4 standard from ISO/IEC, frame header information (referred to as VOP header in MPEG-4) is provided to indicate whether the entirety of an image is intra-frame coded (vop_coding_type). When such information is provided, the header is detected so that the storage process or decoding can start with the image coded signal frame in which the entirety of an image is coded in the intra-frame coding mode. Detection of the header information may be performed in the image decoding unit 5 so that the information is sent to the coded signal storage unit 4 as the coding mode signal. Alternatively, the coded signal storage unit 4 detects the header information so that the storage process can start with a frame in which the entirety of an image is coded in the intra-frame coding mode. In the latter case, the coding mode signal from the image decoding signal 5 is not necessary.

### Second embodiment

A description will now be given of the operation according to the second embodiment.

The second embodiment takes advantage of a setting whereby the image signal transmitting apparatus A transmits the coded image signal in which the entirety of an image is coded in the intra-frame coding mode to the image signal storage and reconstruction apparatus B when a circuit for transmitting the coded image signal is opened. A background for this is that the image signal transmitting apparatus A does not necessary use the intra-frame coding mode even when the intra-frame request signal is received from the image signal storage and reconstruction apparatus B. More specifically, the image signal transmitting apparatus A may not be set up, in the first place, for the intra-frame coding, in which the entirety of an image is coded in the intra-frame coding mode, in response to the intra-frame request signal, or the transmitting apparatus may not bound by any agreement to provide the intra-frame coding process as requested. The construction used in the second embodiment is the same as that of the first embodiment so that the operation according to the second embodiment will now be described with reference to Fig. 2.

The image signal storage and reconstruction apparatus B according to the second embodiment performs a series of steps in which the circuit currently used for transmission and reception of the coded image signal is closed temporarily when the coded image signal is stored and then reopen. In this way, the image signal transmitting apparatus A is directed to transmit the coded image signal in which the entirety of an image is coded in the intra-frame coding mode. The second embodiment is configured to close and open the circuit to direct the image signal transmitting apparatus A to transmit the coded image signal in which the entirety of an image is coded in the intra-frame coding mode. Therefore, the transmission of the intra-frame request signal may be eliminated. Alternatively, the intra-frame request signal is initially transmitted. When it is determined that the coded image signal in which the entirety of an image is coded in the intra-frame coding mode is not transmitted from the image signal transmitting apparatus A, the circuit is closed and then reopened.

When the circuit is temporarily closed and then reopened, the image coding unit 1 of the image signal transmitting apparatus A is controlled by the coding control unit 2 to perform the intra-frame coding of the entirety of an image. The resultant coded image signal is transmitted to the image signal storage and reconstruction apparatus B.

The coded signal storage unit 4 of the image signal storage and reconstruction apparatus B starts storing the coded image signals transmitted from the image signal transmitting apparatus A immediately after the circuit is reopened. Thereby, it is possible to start the storage with the image signal in which the entirety of an image is coded in the infra-frame coding so that the decoding is immediately possible therefrom.

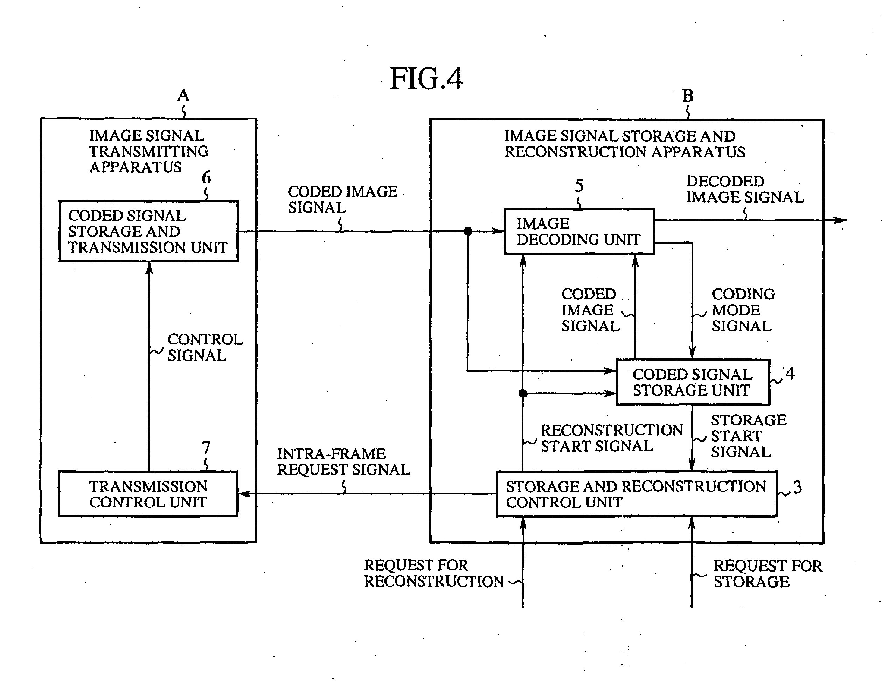

The steps of closing the circuit temporarily and reopening it later may be effected by shutting down the communication circuit and then reconnecting to it. Alternatively, as shown in Fig. 3, when the communication proceeds using the multiplexed system as defined in ITU-T H.223 standard, only the circuit used for transmission of the coded image signal (logical channel) is closed and then reopened.

Fig. 3 shows a process for the closing and reopening of a transmission line for a coded image signal in multiplex communication according to, for example, the ITU-T H.223 standard.

Fig. 3 shows that, in a construction in which a plurality of types of information including speech, audio, data and control are communicated, respective logical channels CH-1∼CH-4 are established. By multiplexing the logical channels CH-1∼CH-4, the multiplexed data is generated for communication.

When the method according to the second embodiment is employed in a system in which the H.233 standard is complied with, it is ensured that the intra-frame coded image signal is received at the start of reception, by temporarily closing only the logical channel CH-2 used for communication of the coded image signal and then reopening another logical channel to resume communicating the coded image signal.

The logical channels for other information such as speech (in the case of Fig. 3, CH-1, CH-3 and CH-4) need not be closed. Accordingly, the services other than communication of image signals for storage can continue without interruption.

As described, according to the second embodiment, when the coded image signal is to be stored, the image signal storage and reconstruction apparatus B temporarily closes the circuit currently used for transmission and reception of the coded image signal, and then reopens the circuit, thus directing the image signal transmitting apparatus A to transmit the coded image signal in which the entirety of an image is coded in the intra-frame coding mode. Thereby, it is ensured that the image signal transmitting apparatus A, which is not set up for the intra-frame coding process of the entirety of an image upon reception of the intra-frame request signal, transmits the coded image signal in which the entirety of an image is coded in the intra-frame coding mode.

Accordingly, by storing the coded image signal transmitted from the image signal transmitting apparatus A immediately after the communication circuit is reopened, the image signal storage and reconstruction apparatus B is allowed to start the storage with the coded image signal in which the entirety of an image is coded in the intra-frame coding mode so that immediate proper decoding is ensured. In a similar configuration as the first embodiment, it is possible to reconstruct the stored coded image signal without requiring an increase in the scale of apparatus and without displaying disturbed images.

### Third embodiment

In the first and second embodiments, the image signal transmitting apparatus A is described as being configured to transmit the coded image signal while the image signal is being input and coded. The image signal transmitting apparatus A according to the third embodiment is designed to transmit the coded image signal already stored.

Fig. 4 shows a construction of an image signal storage and reconstruction apparatus and an image signal transmitting apparatus according to a third embodiment of the present invention.

Referring to Fig. 4, the image signal transmitting apparatus A comprises a coded signal storage and transmission unit 6 storing the coded image signals coded in the intra-frame coding mode or the inter-frame coding mode, and outputting the stored image signal for transmission. The apparatus A further comprises a transmission control unit 7 controlling the coded signal storage and transmission unit 6. The other aspects of the construction are the same as the corresponding aspects of the first embodiment shown in Fig. 2 so that the description thereof is omitted.

A description will now be given of the operation according to the third embodiment.

In a similar configuration as the first embodiment, the third embodiment allows the image signal storage and reconstruction apparatus B to transmit the intra-frame request signal to the image signal transmitting apparatus A so as to request the coded image signal in which the entirety of an image is coded in the intra-frame coding. The storage start signal is transmitted to the coded signal storage unit 4. In a similar configuration as the second embodiment, the third embodiment may also be configured to request the coded image signal in which the entirety of an image is coded in the intra-frame coding mode by temporarily closing the circuit and then reopening it.

The coded image signals are stored in the coded image signal storage and transmission unit 6 of the image signal transmitting apparatus A according to the third embodiment such that the coded image signal in which the entirety of an image is coded in the intra-frame coding mode is read out first for transmission. Accordingly, responsive to the intra-frame request signal from the image signal storage and reconstruction apparatus B, the coded image signals in which the entirety of an image is coded in the intra-frame coding mode are successively read out from storage for transmission.

Reading out of the intra-frame coded image signal at the start and transmitting the same may be effected by several means. For example, the transmission control unit 7 may control the coded signal storage and transmission unit 6 to start the transmission with the coded image signal in which the entirety of an image is coded in the intra-frame coding and not to transmit inter-frame coded image signals. Alternatively, the coded image signals are stored in the coded signal storage and reconstruction unit 6 such that the coded image signal in which the entirety of an image is coded in the intra-frame coding mode is transmitted at the start.

When the coded image signals are not stored in the coded signal storage and reconstruction unit 6 such that the coded image signal in which the entirety of an image is coded in the intra-frame coding mode is transmitted at the start, the intra-frame request received from the image signal storage and reconstruction apparatus B may result in the inter-frame coded signal being transmitted to the image signal storage and reconstruction apparatus B. In this case, as described in the first and second embodiments, the image decoding unit 5 and the coded image storage unit 4 of the image signal storage and reconstruction apparatus B ensure that the storage or reconstruction starts with the coded image signal in which the entirety of an image is coded in the intra-frame coding mode.

As described, by providing, in the image signal transmitting apparatus A, the coded signal storage and transmission unit 6 for transmitting the stored image signal, instead of the image coding unit 1 for coding the input image signal and transmitting the coded signal, the same advantages that are available in the first and second embodiments are also available by transmitting stored image signals.

Insertion of the coded image signal in which the entirety of an image is intra-frame coded is not an essential requirement. Thus, in the first through third embodiments, an assumption is made that, absent any specific request, the image signal transmitting apparatus A may transmit coded image signals in which the frames other than the first frame occurring at the start of communication are inter-frame coded. A request is therefore sent from the image signal storage and reconstruction apparatus B to the image signal transmitting apparatus A to ensure that the coded image signal in which the entirety of an image is intra-frame coded is transmitted. However, where it is expected that coded image signals in which intra-frame coded images are inserted between inter-frame coded images are transmitted from the image signal transmitting apparatus A to the image signal storage and reconstruction apparatus B without exception, transmission of an intra-frame request or the like requesting the transmission, from the image signal storage and reconstruction apparatus B to the image signal transmitting apparatus A, of the coded image signal in which the entirety of an image is intra-frame coded may be eliminated. In this case, the storage start signal from the storage and reconstruction control unit 3 of the image signal storage and reconstruction apparatus B may direct the coded signal storage unit 4 to start the storage with the coded image signal in which the entirety of an image is intra-frame coded, or the reconstruction start signal from the storage and reconstruction control unit 3 may direct the image decoding unit 5 to start the decoding with the coded image signal in which the entirety of an image is intra-frame coded.

### INDUSTRIAL APPLICABILITY

As described, the image signal storage and reconstruction apparatus and the image signal transmitting apparatus according to the present invention is adapted for reconstruction of stored coded image signals without requiring an increase in the scale of apparatus and without displaying disturbed images.

## Claims

1. An image signal reconstruction storage and reconstruction apparatus storing a coded image signal from an image signal transmitting apparatus in accordance with a request for storage and decoding the coded image signal thus stored, in accordance with a request for reconstruction, comprising:
an image decoding unit decoding the coded image signal;
a coded signal storage unit storing the coded image signal; and
a storage and reconstruction control unit directing, in accordance with the request for storage, the image signal transmitting apparatus to transmit the coded image signal in which the entirety of an image is intra-frame coded, transmitting a request for storage to direct said coded signal storage unit to start the storage, and directing, in accordance with the request for reconstruction, said image decoding unit to start the reconstruction by decoding the coded image signal stored in said coded signal storage unit.

2. The image signal storage and reconstruction apparatus according to claim 1, wherein said storage and reconstruction control unit requests the transmission of the coded image signal in which the entirety of an image is intra-frame coded, by transmitting, responsive to the request for storage, the intra-frame request signal to the image signal transmitting apparatus.

3. The image signal storage and reconstruction apparatus according to claim 2, wherein said storage and reconstruction control unit repeats the transmission of the intra-frame request signals.

4. The image signal storage and reconstruction apparatus according to claim 1, wherein said storage and reconstruction control unit requests, responsive to the request for storage, the transmission of the coded image signal in which the entirety of an image is intra-frame coded from the image signal transmitting apparatus, by temporarily closing a communication circuit for transmitting the coded image signal and then opening the same.

5. The image signal storage and reconstruction apparatus according to claim 1, wherein said image decoding unit outputs, when decoding the coded image signal from the image signal transmitting apparatus, a coding mode signal indicating whether or not the entirety of an image is intra-frame coded, to said coded signal storage unit, and
said coded signal storage unit start the storage with the coded image signal in which the entirety of an image is intra-coded, in accordance with the coding mode signal.

6. The image signal storage and reconstruction apparatus according to claim 1, wherein said image decoding unit, when requested by said storage and reconstruction control unit to start the reconstruction, determines whether the coded image signal stored in said coded signal storage unit is a coded image signal in which the entirety of an image is intra-coded, so as to start the reconstruction by start the decoding with the coded image signal in which the entirety of an image is intra-frame coded.

7. The image signal storage and reconstruction apparatus according to claim 1, wherein said coded signal storage unit extracts information indicating a coding mode for the entirety of an image from the coded image signal transmitted from the image signal transmitting apparatus, so as to start the storage with the coded image signal in which the entirety of an image is intra-frame coded.

8. An image signal transmitting apparatus transmitting a coded image signal to an image signal storage and reconstruction apparatus, comprising:
an image coding unit coding an input image signal and transmitting the coded image signal to the image signal storage and reconstruction apparatus; and
a coding control unit controlling, in accordance with a request from the image signal storage and reconstruction apparatus for the coded image signal in which the entirety of an image is intra-frame coded, said image coding unit to transmit the coded image signal in which the entirety of an image is intra-frame coded to the image signal storage and reconstruction apparatus

9. An image signal transmitting apparatus transmitting a coded image signal to an image signal storage and reconstruction apparatus, comprising:
an image signal storage and transmission unit transmitting the coded image signal already stored to the image signal storage and reconstruction apparatus; and
a transmission control unit controlling, in accordance with a request from the image signal storage and reconstruction apparatus for the coded image signal in which the entirety of an image is intra-frame coded, said image signal storage and transmission unit to transmit the coded image signal in which the entirety of an image is intra-frame coded to the image signal storage and reconstruction apparatus.

10. The image signal transmitting apparatus according to claim 8, wherein, when repeatedly receiving the requests for transmission of the coded image signal in which the entirety of an image is intra-frame coded from the image signal storage and reconstruction apparatus, said coding control unit controls the frequency with which the input image signal for the entirety of an image is intra-frame coded, in accordance with the status of errors occurring in communication.

11. The image signal transmitting apparatus according to claim 9, wherein, when repeatedly receiving the requests for transmission of the coded image signal in which the entirety of an image is intra-frame coded from the image signal storage and reconstruction apparatus, said transmission control unit controls the frequency with which the input image signal for the entirety of an image is intra-frame coded, in accordance with the status of errors occurring in communication.
